# EUROPÄISCHE PATENTSCHRIFT

(11) **EP 4 474 194 B1**
(45) Veröffentlichungstag und Bekanntmachung des Hinweises auf die Patenterteilung: **10.12.2025**
(21) Anmeldenummer: 24177227.6
(22) Anmeldetag: 22.05.2024
(51) Int. Cl.: B60K 35/10, B60K 35/50, B60K 35/53, B60N 2/75, B60R 7/04, B60R 11/00, B60R 11/02, B60R 16/03

(54) **HALTEVORRICHTUNG IN EINEM FAHRZEUG FÜR EIN EINGABEGERÄT MIT EINER ANZEIGE**
HOLDING DEVICE IN A VEHICLE FOR AN INPUT DEVICE WITH A DISPLAY
DISPOSITIF DE RETENUE DANS UN VÉHICULE POUR UN DISPOSITIF D'ENTRÉE AVEC UN AFFICHAGE

(30) Priorität: 01.06.2023 DE 102023205134
(43) Veröffentlichungstag der Anmeldung: 11.12.2024
(73) Patentinhaber: VOLKSWAGEN AG, 38440 Wolfsburg (DE)
(72) Erfinder: Stahl, Arne, 38518 Gifhorn (DE); Stamm, Bernd, 38162 Cremlingen (DE)

(56) Entgegenhaltungen:
- GB-A- 2 384 611
- US-A1- 2016 009 178
- US-A1- 2018 178 652
- US-B1- 6 371 345

## Beschreibung

Die Erfindung betrifft eine Haltevorrichtung in einem Fahrzeug für ein Eingabegerät mit einer Anzeige, die mit einem Kugelkopf, einem Käfig, einer Feder und einer Halterung für das Eingabegerät gebildet ist. Sie betrifft ferner ein Fahrzeug mit einer solchen Einrichtung.

Fahrzeuge weisen eine Vielzahl von Eingabeeinrichtungen auf, mit denen Fahrzeugfunktionen, Komfortfunktionen und/oder Entertainmentfunktionen zu steuern sind. Üblicherweise werden diese im vorderen Bereich des Fahrzeugs bereitgestellt, wo der Fahrer sie bedienen kann. Es besteht jedoch das Bedürfnis, dass derartige Eingabeeinrichtungen auch in anderen Bereichen des Fahrzeugs bereitgestellt werden, so dass auch andere Fahrzeuginsassen, vor allem Fahrgäste im hinteren Bereich des Fahrzeugs, zumindest Komfortfunktionen und/oder Entertainmentfunktionen steuern können. Dies wird auch dann relevant, wenn das Fahrzeug autonom fahren soll und die Fahrgäste entfernt von der Fahrerposition Platz nehmen.

Werden nun Eingabeeinrichtungen an anderen Positionen im Fahrzeug bereitgestellt, müssen sie so positioniert und ausgestaltet werden, dass sie die Fahrzeuginsassen nicht behindern oder stören. Dabei kann aber die Situation auftreten, dass die Eingabeeinrichtungen schlecht einsehbar und/oder erreichbar für einen Benutzer sind. Ist die Einsehbarkeit und Erreichbarkeit optimiert, kann die Eingabeeinrichtung die Bewegungsfreiheit des Benutzers und/oder Funktionen des Fahrzeugs einschränken, wie beispielsweise bei einem sogenannten Easy-Entry-Lauf eines Sitzes im Weg sein oder mit anderen Bereichen im Fahrzeug kollidieren.

Daher ist eine Lösung gesucht, die eine Eingabeeinrichtung bereitstellt, die individuell positioniert werden kann und dabei leichtgängig bewegt werden kann, so dass sie bei einem unbeabsichtigten Kontakt oder einer sich anbahnenden Kollision ausweicht. Die Aufgabe der Erfindung liegt darin, eine Lösung dafür vorzuschlagen.

Die Aufgabe der Erfindung wird gelöst mit einer Haltevorrichtung nach Anspruch 1 und einem Fahrzeug nach Anspruch 10. Weitere bevorzugte Ausgestaltungen der Erfindung ergeben sich aus den übrigen, in den Unteransprüchen genannten Merkmalen.

Die erfindungsgemäße Haltevorrichtung in einem Fahrzeug für ein Eingabegerät mit einer Anzeige ist gebildet mit
- einem Kugelkopf,
- einem Käfig, der den Kugelkopf zumindest teilweise umfasst,
- einer Feder, die den Käfig an dem Kugelkopf fixiert,
- einem Eingabegerät mit einer Anzeige, und
- einer Halterung für das Eingabegerät mit einer Anzeige, die an dem Käfig ausgebildet und/oder mit diesem verbunden ist und die das Eingabegerät hält.

Ein Eingabegerät mit einer Anzeige soll ein Gerät sein, mit dem verschiedene Funktionen eines Fahrzeugs gesteuert werden können, so zum Beispiel Komfortfunktionen wie eine Innenraumbeleuchtung, die Temperatur im Fahrzeuginnenraum und/oder die Einstellung des Sitzes, aber auch Entertainmentfunktionen wie das Abspielen von Musik, Filmen und dergleichen. Weitere Funktionen, die ein Fahrzeuginsasse beeinflussen wollen könnte, liegen ausdrücklich im Rahmen der Erfindung.

Ein solches Eingabegerät soll eine Anzeige aufweisen, so dass ein Benutzer sieht, welche Funktionen er steuert und welche Bedienmöglichkeiten er hat. Dazu können Bedienelemente wie Tasten, Slider oder ähnliches vorgesehen sein, jedoch ist es besonders bevorzugt, wenn die Anzeige berührungssensitiv ausgebildet ist, so dass das Eingabegerät mit einem sogenannten "Touch-Display" ausgebildet ist und als solches bedient werden kann. Dadurch wird die Anzeigefläche maximiert, weil kein Platz für feststehende Bedienelemente verbraucht wird. Sie können aber auch ergänzend vorgesehen werden.

Der besseren Lesbarkeit halber wird nachfolgend auch teilweise nur der Begriff des Eingabegerätes verwendet, wobei aber stets das Eingabegerät mit Anzeige gemeint ist.

Um nun die gewünschte Beweglichkeit des Eingabegerätes zu erlangen, ist die Haltevorrichtung mit einem Kugelkopf, einem sie zumindest teilweise umgebenden Käfig und einer Feder gebildet, die den Käfig an dem Kugelkopf fixiert. Der Kugelkopf bildet dabei die Basis für die Beweglichkeit der Haltevorrichtung. Der Kugelkopf wird an einer geeigneten Stelle im Fahrzeug angeordnet und fixiert. Dies kann mithilfe eines Adapters oder anderer geeigneter Positionierungshilfen erfolgen, sofern der Kugelkopf von dem ebenfalls zur Haltevorrichtung gehörenden Käfig zumindest teilweise umfasst werden kann und eine Bewegung des Käfigs um einen wesentlichen Bereich des Kugelkopfes möglich ist.

Der Käfig soll also den Kugelkopf vorzugsweise so umgreifen, dass er einen sicheren Halt am Kugelkopf hat und um diesen bewegt, also rotiert und/oder verkippt werden kann. Er kann dabei zum Beispiel über den Kugelkopf geführt werden und dann auf diesem einrasten. Er kann vollflächig oder mit Ausnehmungen ausgebildet sein.

Um den Halt des Käfigs am Kugelkopf sicherzustellen und gleichzeitig die notwendige Kraft zum Bewegen des Käfigs in Relation zu dem Kugelkopf zu beeinflussen, ist eine Feder vorgesehen, die den Käfig am Kugelkopf fixiert, wobei die Fixierung jedoch vorrangig das Ablösen des Käfigs vom Kugelkopf verhindert. Durch die Auswahl der Feder und der durch sie bereitgestellten Federkraft kann die notwendige Kraft zum Bewegen des Käfigs beeinflusst werden.

Die Anordnung beziehungsweise Halterung des Kugelkopfes in Zusammenspiel mit Käfig und Feder gibt den Bewegungsspielraum des Käfigs um den Kugelkopf vor, vor allem hinsichtlich der möglichen Verkippung um den Kugelkopf. Mit der Verkippung ist die Neigung gegenüber der Achse des Kugelkopfes gemeint, die vom Befestigungspunkt des Kugelkopfes im Fahrzeug ausgeht und durch sein Zentrum führt. Vor allem aber soll die Rotation des Käfigs um den Kugelkopf und um die vorbeschriebene Achse nur so wenig wie möglich eingeschränkt werden.

Schließlich ist eine Halterung für das Eingabegerät mit Anzeige vorgesehen. Diese Halterung ist an dem Käfig ausgebildet und/oder mit diesem verbunden, so dass sie sich mit dem Käfig um den Kugelkopf bewegen lässt. An dem Käfig ausgebildet meint, aus diesem ausgeformt oder mit ihm einstückig gefertigt, so dass der Käfig auch die Halterung umfasst. Mit dem Käfig verbunden sein kann die Halterung mit an sich bekannten lösbaren und nicht lösbaren Befestigungsmethoden.

Diese Halterung nun hält das Eingabegerät, in dem es dieses zumindest bereichsweise umgreift, lösbar oder nicht lösbar mit diesem verbunden wird (zum Beispiel verschraubt) oder anderweitig mit dem Eingabegerät in Kontakt gebracht wird, so dass es sicher in seiner Position relativ zu der Halterung fixiert ist.

Die so gebildete Haltevorrichtung für das Eingabegerät mit Anzeige ist sehr beweglich. Sie kann um den Kugelkopf rotiert und/oder verkippt werden. Damit kann ein Benutzer das Eingabegerät und mithin die Anzeige optimal auf seinen Blickwinkel, der durch Sitzposition und Größe des Benutzers beeinflusst wird, einstellen, so dass er eine optimale Sicht auf die Anzeige hat und Spiegeleffekte vermieden werden können. Durch eine ausreichend weich eingestellte Feder weicht das Eingabegerät bei einem unbeabsichtigten Kontakt einfach aus, so dass Schäden vermieden werden können. Ein solcher unbeabsichtigter Kontakt kann eine Bewegung eines Fahrzeuginsassen sein, bei der er mit dem Eingabegerät kollidiert. Je nach Anordnung der Haltevorrichtung im Fahrzeug kann aber auch eine Sitzverstellung und insbesondere ein Easy-Entry-Lauf eines Sitzes zu Kollisionen führen, die durch das Ausweichen des Eingabegerätes vermieden oder zumindest gemindert werden können.

Gemäß einer ersten Ausgestaltung der erfindungsgemäßen Haltevorrichtung ist die Haltevorrichtung an einem Fahrzeugsitz, auf oder an einer Armlehne eines Fahrzeugsitzes, an einer Mittelkonsole des Fahrzeugs oder an einem Armaturenbrett des Fahrzeugs angeordnet. Wie bereits vorab angedeutet, kann dies mit einem Adapter oder ohne zusätzliche Elemente vorgesehen sein.

Die Haltevorrichtung kann also beispielsweise an einem Fahrzeugsitz angeordnet sein. Ein geeigneter Ort kann dazu eine Seitenfläche einer Rückenlehne sein, an der die Haltevorrichtung mithilfe eines Adapters angebracht sein kann. Damit bewegt sich die Haltevorrichtung mit der Lehne und damit dem Sitz, wenn dieser von einem Fahrzeuginsassen bewegt wird. Die Bewegung der Haltevorrichtung ist damit aber auch unabhängig von der Bewegung anderer beweglicher Teile des Sitzes, wie beispielsweise der Armlehne.

Die Haltevorrichtung kann auf oder an einer Armlehne im Fahrzeug angeordnet werden. Derartige Armlehnen können mit einem Fahrzeugsitz verbunden oder gekoppelt sein, sie können aber auch unabhängig davon gehalten und zu bewegen sein. Gerade wenn eine Armlehne separat beweglich ist und die Haltevorrichtung an oder auf ihr angeordnet ist, kann sie mit der Armlehne mitbewegt und durch die Haltevorrichtung selbst in ihrer Position feineingestellt werden. Wird die Armlehne "aus dem Weg" bewegt, wird damit auch die Haltevorrichtung aus dem Bewegungsbereich des Fahrzeuginsassen bewegt, so dass sie nicht stört oder ein Hindernis bildet.

Eine solche Anordnung an oder auf einer Armlehne kann insbesondere die Armlehne eines Modular Captain Chairs umfassen (auch: MCC-Sitz). Bei dessen Bewegung, vor allem bei einem Easy-Entry-Lauf, kann es zu Kollisionen kommen, die das Eingabegerät beschädigen könnten. Durch die bewegliche Lagerung gemäß der Erfindung aber wird das Eingabegerät bei Berührung weggeschoben und weicht somit einer Kollision aus.

Auch die Mittelkonsole selbst kann ein Ort sein, an dem die Anordnung der Haltevorrichtung wünschenswert sein kann, wenn zum Beispiel Fahrzeuginsassen auf benachbarten Sitzen gemeinsam oder abwechselnd auf das Eingabegerät mit Anzeige zugreifen wollen oder sollen.

Gleiches gilt für das Armaturenbrett des Fahrzeugs, an dem die Haltevorrichtung angeordnet sein kann. Mit der beweglichen Anordnung gemäß der Erfindung könnte damit ein Beifahrer das Eingabegerät zu sich drehen und damit interagieren, ohne dass der Fahrer des Fahrzeugs davon abgelenkt werden würde. Zudem hätte der Beifahrer die Möglichkeit, die Anzeige gut einzusehen, was im Stand der Technik oft nur erschwert möglich ist, weil dort Anzeigen üblicherweise in Richtung des Fahrers ausgerichtet und nicht verstellbar sind.

Eine zweite Ausgestaltung der Haltevorrichtung sieht vor, dass der Kugelkopf zumindest bereichsweise einen Hohlraum zur Durchführung von elektrischen Leitungen und/oder Kommunikationsleitungen aufweist. Ein solcher Hohlraum soll das Einführen beziehungsweise Durchführen von elektrischen Leitungen für die Energieversorgung des Eingabegerätes und/oder von Kommunikationsleitungen für die Übermittlung von Eingaben der Fahrzeuginsassen an das Fahrzeug beziehungsweise die Übermittlung anzuzeigender Informationen an die Anzeige ermöglichen.

Vorzugsweise können die Leitungen nahe der Befestigung des Kugelkopfes am Fahrzeug eingeführt und im Bereich der Halterung für das Eingabegerät zu diesem hinausgeführt werden. Der Hohlraum kann das gesamte Innere des Kugelkopfes umfassen oder auch nur bereichsweise für die Durchführung der Leitungen vorgesehen sein.

Werden die Leitungen nicht in der vorbeschriebenen Weise zu dem Eingabegerät geführt, können sie alternativ in einer Schlaufe von außerhalb an das Eingabegerät herangeführt werden, wobei eine solche Schlaufe die Bewegungsfreiheit der Haltevorrichtung sicherstellt.

Das Eingabegerät kann fest mit der Haltevorrichtung verbunden sein, mit Vorteil kann es aber auch aus der Haltevorrichtung entnehmbar gestaltet sein. In diesem Fall sollten im Bereich der Halterung für das Eingabegerät mit Anzeige Kontaktierungen vorgesehen sein, über die bei eingesetztem Eingabegerät elektrische Energie zugeführt werden kann, die insbesondere in einem eigens dafür in dem Eingabegerät vorgesehenen Energiespeicher gespeichert wird. Die Kommunikation beziehungsweise Übertragung von Informationen und Steuerbefehlen sollte in dieser Ausgestaltung vorzugsweise drahtlos erfolgen.

In einer weiteren Ausgestaltung der Haltevorrichtung ist das Eingabegerät mit Anzeige in eine Ruheposition verstellbar und/oder verschiebbar gelagert, um in eine Ruheposition verstellt zu werden. Eine Ruheposition soll eine Position sein, in die das Eingabegerät oder die gesamte Haltevorrichtung bewegt werden kann, wenn es nicht genutzt werden soll. Eine solche Ruheposition zielt darauf ab, die Bewegungsfreiheit der Fahrzeuginsassen zu maximieren und Kollisionen mit dem Eingabegerät zu vermeiden, aber auch um versehentliche Eingaben zu verhindern.

Eine Ruheposition kann vorliegen, wenn das Eingabegerät an der Haltevorrichtung so verkippt und/oder rotiert wird, dass es senkrecht in Bezug zum Fahrzeug ausgerichtet ist. Damit wird ein sehr geringer Platzbedarf verwirklicht. Dabei kann mit Hilfe von Sensorik auch eine solche Position erkannt werden und das Display in einen Ruhemodus oder abgeschaltet werden, so dass keine Eingabe bei versehentlichem Berühren erfolgt.

Eine Ruheposition kann auch darin bestehen, das Eingabegerät nach hinten zu klappen, so dass die Anzeigeeinrichtung nach unten weist. Auch damit kann eine versehentliche Eingabe vermieden werden. Alternativ oder zusätzlich kann eine Verschiebung, beispielweise nach hinten erfolgen. Dies erweist sich vor allem bei einer Anordnung auf einer Armelehne oder Mittelkonsole als vorteilhaft, weil mit der Verschiebung der Haltevorrichtung nach hinten eine Position erreichbar ist, in der eine versehentliche Kollision mit einem Fahrzeuginsassen unwahrscheinlich wird.

Die Ruheposition kann im einfachsten Fall durch die Bewegungen des Eingabegerätes relativ zu dem Kugelkopf erfolgen (zum Beispiel nach hinten klappen). Es kann aber auch vorgesehen sein, dass die Vorrichtung mittels eines Schienensystems oder eines anderweitig beweglich ausgestalteten Adapters im Fahrzeug angebracht ist, auf dem eine Bewegung erfolgen kann.

Ein zusätzlicher Schutz für das Eingabegerät oder gar die gesamte Haltevorrichtung während der Ruheposition wird erreicht, wenn das Eingabegerät mit Anzeige derart verstellbar und/oder verschieblich gelagert ist, dass es zum Erreichen der Ruheposition in eine dafür im Fahrzeug vorgesehene Ausnehmung bewegbar ist. Ist die Haltevorrichtung beispielsweise an einer Mittelkonsole eines Fahrzeugs angeordnet, kann in dieser eine Vertiefung vorgesehen sein, in der zumindest das Eingabegerät gänzlich oder zumindest teilweise aufgenommen werden kann. Um allerdings dahin zu gelangen, muss die Haltevorrichtung die notwendige Beweglichkeit bereitstellen, also beispielsweise so angeordnet und ausgerichtet sein, dass der Käfig und die Halterung mit dem Eingabegerät soweit verkippt und/oder rotiert werden können, dass sie teilweise oder ganz in die Vertiefung gelangen. Optional kann die Halterung einen oder mehrere zusätzliche Bewegungsfreiheitsgrade bereitstellen, um die notwendige Beweglichkeit zu gewährleisten.

Alternativ oder zusätzlich kann das Eingabegerät mit Anzeige an seiner Rückseite eine Oberflächengestaltung aufweisen, die mit der es in der Ruheposition umgebenden Oberfläche korrespondiert. Eine solche Oberflächengestaltung kann die Farbe, das Material oder die Materialien und/oder die Haptik umfassen. Ist die Rückseite des Eingabegerätes nun also gleichartig zu den Oberflächen gestaltet, die in der Ruheposition um diese herum befindlich sind, lenkt das Eingabegerät nicht mehr ab, sondern fügt sich in die Umgebung ein. Zudem kann eine solche Oberflächengestaltung einen zusätzlichen Schutz des Eingabegerätes bilden. Die Oberflächengestaltung kann dabei direkt am Eingabegerät vorgesehen sein, aber auch als zusätzliches Element, beispielsweise zum Nachrüsten vorgesehen sein.

Die offenbarte Haltevorrichtung kann eine motorisierte Bewegungsvorrichtung aufweisen, mit der das Eingabegerät von einer Gebrauchsposition in die Ruheposition und/oder von der Ruheposition in eine Gebrauchsposition zu bewegen ist. Die Gebrauchsposition ist die Position des Eingabegerätes, in dem eine Eingabe und/oder eine Anzeige von Informationen erfolgen und von einem Benutzer wahrgenommen werden kann. Die motorisierte Bewegungsvorrichtung soll das Eingabegerät zwischen den beiden Positionen hin- und her bewegen können. Dazu kann beispielsweise ein Elektromotor vorgesehen sein und davon ausgehend ein oder zwei Arme, die an dem Eingabegerät oder dessen Halterung angreifen. Der Motor rotiert den oder die Arme, so dass damit auch das Eingabegerät und je nach Ausgestaltung optional auch die Halterung um den Kugelkopf in die Ruheposition beziehungsweise aus dieser in die Gebrauchsposition rotiert werden. Ausgelöst werden kann ein solcher Positionswechsel unter anderem durch eine Eingabe auf dem Eingabegerät, wenn es in die Ruheposition wechseln soll. Für einen Wechsel von der Ruheposition in die Gebrauchsposition kann eine Eingabe über ein eigens dafür vorgesehenes Bedienelement erfolgen.

In noch einer weiteren Ausgestaltung weist die Haltevorrichtung eine Umhüllung auf, die die Haltevorrichtung zumindest teilweise umhüllt. Eine solche Umhüllung kann auch als Manschette bezeichnet werden und soll vor allem als Schutz vor Verschmutzung, dem Hängenbleiben mit Kleidung in der Haltevorrichtung oder dem Eingriff eines Benutzers in oder zwischen bewegliche(n) Elemente(n) dienen, um Verletzungen zu vermeiden. Dazu soll diese Umhüllung vorrangig den Kugelkopf, den Käfig und die Feder umhüllen, optional auch den Anschlussbereich der Halterung für das Eingabegerät. Zweckmäßigerweise ist die Umhüllung mit einem flexiblen Material gebildet, so dass die Haltevorrichtung uneingeschränkt bewegt werden kann.

Schließlich ist auch ein Fahrzeug beansprucht, in dem eine Haltevorrichtung der vorbeschriebenen Art vorgesehen ist. Selbstverständlich können auch mehrere Eingabegeräte auf die erfindungsgemäße Weise bereitgestellt werden.

Die erfindungsgemäße Vorrichtung ermöglicht es, Eingabegeräte mit einer Anzeige so anzuordnen und bereitzustellen, dass sie einfach und leicht in eine Position zu bewegen sind, in der sie gut einsehbar und bedienbar für einen oder vor allem auch wechselnde Benutzer sind. Bei unbeabsichtigtem Kontakt oder Kollisionen kann das Eingabegerät ausweichen, so dass Beschädigungen verhindert oder zumindest geringgehalten werden.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: die Hauptkomponenten der erfindungsgemäßen Haltevorrichtung in perspektivischen Ansichten,
- Figur 2: eine Seitenansicht der erfindungsgemäßen Haltevorrichtung,
- Figur 3: einen Fahrzeugsitz in einer perspektivischen Ansicht und ein Detail dazu, und
- Figur 4: eine Draufsicht einer Kollisionssituation mit ausweichendem Eingabegerät.

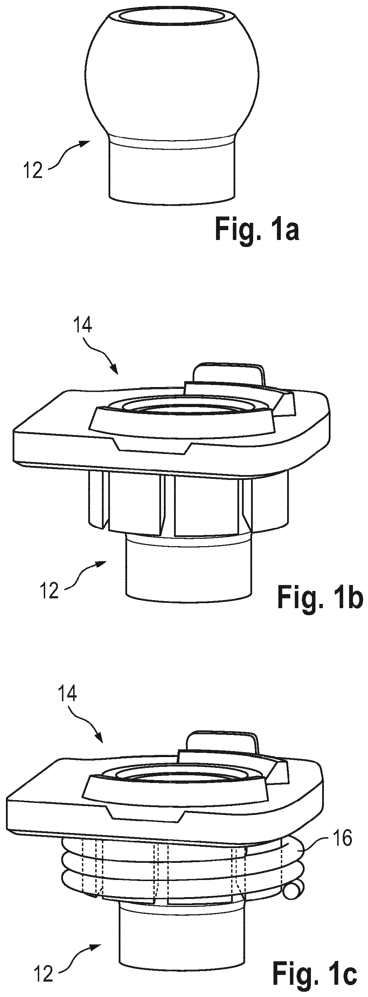

Figur 1 zeigt in den Figuren 1a, 1b und 1c Einzelelemente der Haltevorrichtung 10. In Figur 1a ist der Kugelkopf 12 dargestellt, der nach unten mit einem Hals fortgesetzt wird, der als Anschlagpunkt zur Befestigung im Fahrzeug genutzt werden kann. In Figur 1b ist der Käfig 14 bereits auf den Kugelkopf 12 aufgesetzt und umgreift diesen weitgehend. Er ragt dabei über den Bereich des größten Durchmessers (im Sinne eines Äquators) hinaus und wird dann, wie in Figur 1c gezeigt, mittels der Feder 16 an einem Abheben vom Kugelkopf 12 gehindert. Das Zusammenwirken aus Kugelkopf 12, Käfig 14 und Feder 16 bildet die Basis der erfindungsgemäßen Haltevorrichtung 10 und damit auch der Bewegbarkeit des zugehörigen Eingabegerätes (nicht gezeigt).

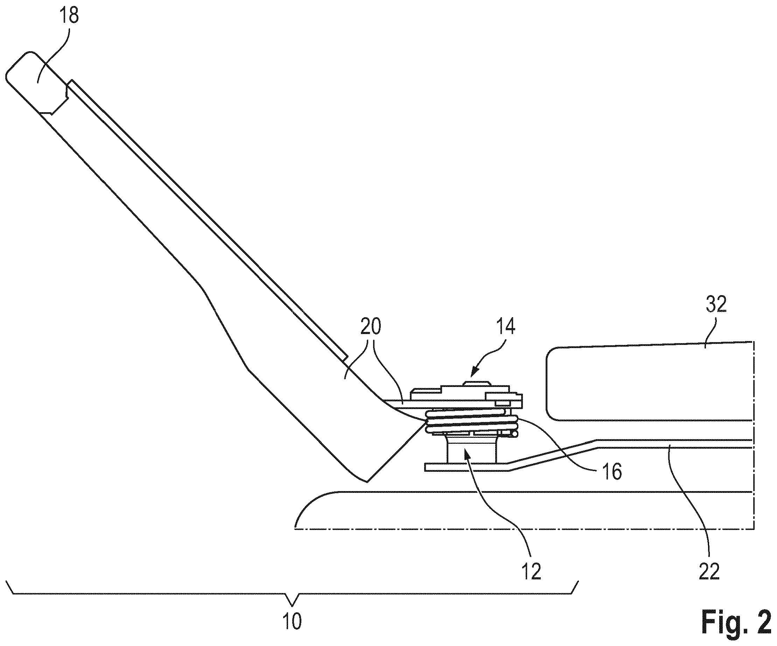

In Figur 2 ist eine Prinzipskizze als Seitenansicht der erfindungsgemäßen Haltevorrichtung 10 in einer beispielhaften Ausgestaltung im Umfeld einer Armlehne 32 eines Fahrzeugsitzes zu sehen. Die Haltevorrichtung 10 ist wie in den Figuren 1a, 1b und 1c gezeigt, mit Kugelkopf 12, dem ihn weitgehend umgreifenden Käfig 14 und der fixierenden Feder 16 gebildet. Ferner ist eine Haltevorrichtung 20 vorgesehen, die an dem Käfig 14 angebracht und befestigt ist und die Anzeigeeinrichtung 18 hält. Leitungen zur Bereitstellung von elektrischer Energie und Kommunikation zwischen Eingabegerät 18 und Fahrzeug werden durch den halsartigen Fortsatz des Kugelkopfes 12 siehe Figur 1a in einen Hohlraum des Kugelkopfes 12 und durch diesen hindurch in die Halterung 20 bis hin zum Eingabegerät 18 geführt.

Die gesamte Haltevorrichtung 10 in der Figur 2 ist an einem Adapter 22 angebracht beziehungsweise auf diesem angeordnet, der wiederum an der Unterseite einer Armlehne 32 angebracht ist (Befestigungspunkt nicht gezeigt).

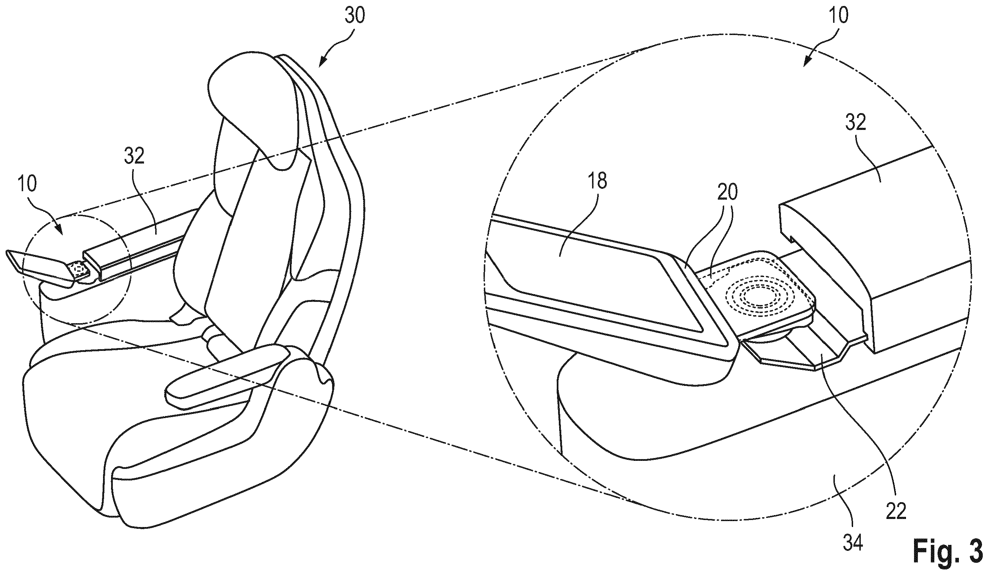

Wie dies in Bezug zu dem Fahrzeugsitz 30 gestaltet ist, zeigt Figur 3 in einer perspektivischen Ansicht und einem zugehörigen Detail. Die Haltevorrichtung 10 aus Figur 2 ist an der rechten Armlehne 32 des als MCC-Sitz ausgeführten Fahrzeugsitzes 30 angeordnet, wie mit Bezug zu Figur 2 ausgeführt. Im Detail ist ersichtlich, dass das Eingabegerät 18 so ausgerichtet ist, dass seine Anzeige nach oben weist. Sie kann aber, durch die Ausgestaltung gemäß der Erfindung zu einem Fahrzeuginsassen auf dem Fahrzeugsitz 30 gedreht und/oder gekippt werden, so dass dieser Fahrzeuginsasse beziehungsweise Benutzer die optimale Sicht auf die Anzeige des Eingabegerätes 18 hat.

Wird das Eingabegerät 18 nicht mehr benötigt, könnte es in eine Ruheposition bewegt werden (nicht gezeigt), bei dem dessen Rückseite nach oben zeigt - beispielsweise indem das Eingabegerät 18 so weit nach hinten geklappt wird wie möglich. Seine nun noch oben weisende Rückseite kann dabei mit einem Material versehen sein, dass dem der Armlehne 32 entspricht und sich so gestalterisch in die nähere Umgebung einfügen. Dadurch wird auch eine Ablenkung der Fahrzeuginsassen gemindert, Fehlbedienungen vermieden und das Eingabegerät 18 geschützt.

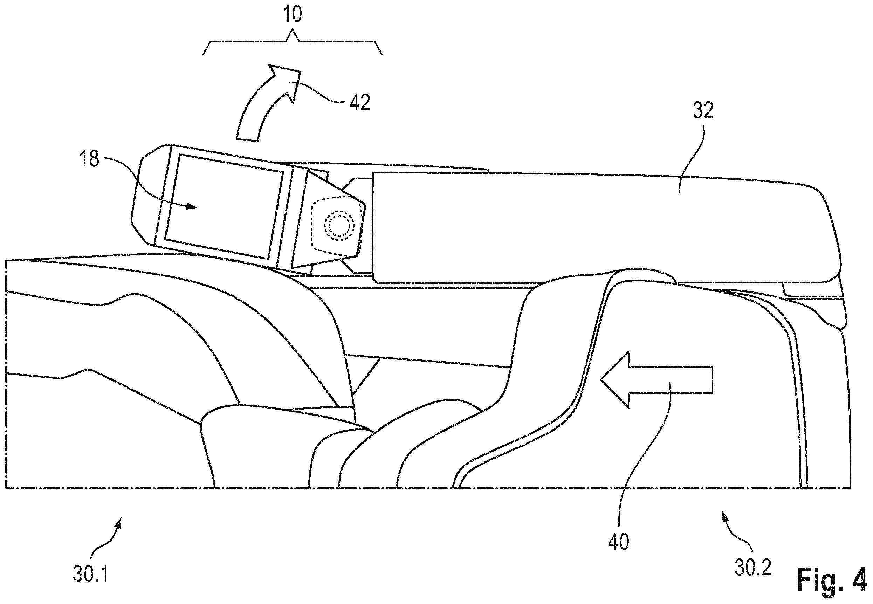

Einer der vorteilhaften Effekte der Haltevorrichtung 10 lässt sich aus Figur 4 erkennen. Dort ist die Haltevorrichtung 10 an einem hinteren Fahrzeugsitz 30.2 beziehungsweise dessen Armlehne 32 angeordnet. Davor befindet sich der vordere Fahrzeugsitz 30.1. Wird nun der hintere Fahrzeugsitz 30.2 im Rahmen eines Easy-Entry-Laufes, wie in Figur 4 mit dem Pfeil und Bezugszeichen 40 gekennzeichnet, nach vorn in Richtung des vorderen Fahrzeugsitzes 30.1 bewegt, trifft die Haltevorrichtung 10 mit dem Eingabegerät 18 an die dortige Armlehne 32, was zu Beschädigungen führen kann.

Durch die erfindungsgemäße Ausgestaltung der Haltevorrichtung 10 mit Kugelkopf 12, Käfig 14 und Feder 16 kann der bewegliche Teil der Haltevorrichtung 10 in der mit dem Pfeil und Bezugszeichen 42 gekennzeichneten Richtung ausweichen, so dass Beschädigungen vermieden werden können.

### Bezugszeichenliste

- 10: Haltevorrichtung
- 12: Kugelkopf
- 14: Käfig
- 16: Feder
- 18: Eingabegerät mit Anzeige
- 20: Halterung für das Eingabegerät
- 22: Adapter für Kugelkopf
- 30: Fahrzeugsitz
- 32: Armlehne
- 34: Mittelkonsole
- 40: Bewegung des hinteren Fahrzeugsitzes
- 42: Ausweichbewegung der Haltevorrichtung

## Patentansprüche

1. Haltevorrichtung (10) in einem Fahrzeug für ein Eingabegerät (18) mit einer Anzeige mit
- einem Kugelkopf (12),
- einem Käfig (14), der den Kugelkopf (12) zumindest teilweise umfasst,
- einer Feder (16), die den Käfig (14) an dem Kugelkopf (12) fixiert,
- einem Eingabegerät (18) mit einer Anzeige, und
- einer Halterung (20) für das Eingabegerät (18) mit einer Anzeige, die an dem Käfig (14) ausgebildet und/oder mit diesem verbunden ist und die das Eingabegerät (18) hält.

2. Haltevorrichtung (10) nach Anspruch 1, wobei die Haltevorrichtung (10) an einem Fahrzeugsitz (30), auf oder an einer Armlehne (32) eines Fahrzeugsitzes (30), insbesondere eines Modular Captain Chairs, an einer Mittelkonsole (34) des Fahrzeugs oder an einem Armaturenbrett des Fahrzeugs angeordnet ist.

3. Haltevorrichtung (10) nach Anspruch 1 oder 2, wobei der Kugelkopf (12) zumindest bereichsweise einen Hohlraum zur Durchführung von elektrischen Leitungen und/oder Kommunikationsleitungen aufweist.

4. Haltevorrichtung (10) nach einem der vorhergehenden Ansprüche, wobei das Eingabegerät (18) mit Anzeige aus der Haltevorrichtung (10) entnehmbar ist.

5. Haltevorrichtung (10) nach einem der vorhergehenden Ansprüche, wobei das Eingabegerät (18) mit Anzeige in eine Ruheposition verstellbar ist und/oder verschiebbar gelagert ist, um in eine Ruheposition verstellt zu werden.

6. Haltevorrichtung (10) nach Anspruch 5, wobei das Eingabegerät (18) mit Anzeige derart verstellbar und/oder verschieblich gelagert ist, dass es zum Erreichen der Ruheposition in eine dafür im Fahrzeug vorgesehene Ausnehmung bewegbar ist.

7. Haltevorrichtung (10) nach Anspruch 5 oder 6, wobei das Eingabegerät (18) mit Anzeige an seiner Rückseite eine Oberflächengestaltung aufweist, die mit der es in der Ruheposition umgebenden Oberfläche korrespondiert.

8. Haltevorrichtung (10) nach einem der vorhergehenden Ansprüche 5 bis 7, wobei sie eine motorisierte Bewegungsvorrichtung aufweist, mit der das Eingabegerät (18) von einer Gebrauchsposition in die Ruheposition und/oder von der Ruheposition in eine Gebrauchsposition zu bewegen ist.

9. Haltevorrichtung (10) nach einem der vorhergehenden Ansprüche, wobei sie eine Umhüllung aufweist, die die Haltevorrichtung (10) zumindest teilweise umhüllt.

10. Fahrzeug mit einer Haltevorrichtung (10) nach einem der vorhergehenden Ansprüche.

## Claims

1. Holding device (10) in a vehicle for an input apparatus (18) with a display, comprising
- a ball head (12),
- a cage (14) which at least partially encloses the ball head (12),
- a spring (16) which secures the cage (14) to the ball head (12),
- an input apparatus (18) with a display, and
- a holder (20) for the input apparatus (18) with a display, which holder is formed on the cage (14) and/or is connected thereto and holds the input apparatus (18).

2. Holding device (10) according to claim 1, wherein the holding device (10) is arranged on a vehicle seat (30), on or on top of an armrest (32) of a vehicle seat (30), in particular of a modular captain's chair, on a center console (34) of the vehicle or on a dashboard of the vehicle.

3. Holding device (10) according to claim 1 or 2, wherein the ball head (12) at least in some regions has a cavity for the passage of electrical lines and/or communication lines.

4. Holding device (10) according to any of the preceding claims, wherein the input apparatus (18) with display can be removed from the holding device (10).

5. Holding device (10) according to any of the preceding claims, wherein the input apparatus (18) with display can be shifted into a rest position and/or is displaceably mounted in order to be shifted into a rest position.

6. Holding device (10) according to claim 5, wherein the input apparatus (18) with display is mounted such that it can be shifted and/or displaced in such a way that it can be moved into a recess provided in the vehicle for this purpose, in order to reach the rest position.

7. Holding device (10) according to claim 5 or 6, wherein the rear side of the input apparatus (18) with display has a surface design which corresponds to the surface surrounding it in the rest position.

8. Holding device (10) according to any of the preceding claims 5 to 7, wherein it comprises a motorized movement device with which the input apparatus (18) can be moved from a use position to the rest position and/or from the rest position to a use position.

9. Holding device (10) according to any of the preceding claims, wherein it comprises a casing which at least partially encases the holding device (10).

10. Vehicle comprising a holding device (10) according to any of the preceding claims.

## Revendications

1. Dispositif de maintien (10) dans un véhicule pour un appareil d'entrée (18) comportant un affichage, comportant
- une tête formant rotule (12),
- une cage (14) qui comprend au moins partiellement la tête formant rotule (12),
- un ressort (16) qui fixe la cage (14) à la tête formant rotule (12),
- un appareil d'entrée (18) comportant un affichage, et
- un élément de maintien (20) pour l'appareil d'entrée (18) comportant un affichage, lequel élément de maintien est réalisé sur la cage (14) et/ou relié à celle-ci et maintient l'appareil d'entrée (18).

2. Dispositif de maintien (10) selon la revendication 1, dans lequel le dispositif de maintien (10) est disposé sur un siège de véhicule (30), sur ou au niveau d'un accoudoir (32) d'un siège de véhicule (30), en particulier d'un siège conducteur modulaire, sur une console centrale (34) du véhicule ou sur un tableau de bord du véhicule.

3. Dispositif de maintien (10) selon la revendication 1 ou 2, dans lequel la tête formant rotule (12) présente, au moins dans certaines zones, une cavité pour le passage de câbles électriques et/ou de lignes de communication.

4. Dispositif de maintien (10) selon l'une des revendications précédentes, dans lequel l'appareil d'entrée (18) comportant un affichage peut être retiré du dispositif de maintien (10).

5. Dispositif de maintien (10) selon l'une des revendications précédentes, dans lequel l'appareil d'entrée (18) comportant un affichage est réglable dans une position de repos et/ou est monté de manière à pouvoir être coulissé afin d'être réglé dans une position de repos.

6. Dispositif de maintien (10) selon la revendication 5, dans lequel l'appareil d'entrée (18) comportant un affichage est monté de manière à pouvoir être réglé et/ou coulissé de telle sorte qu'il peut être déplacé dans un évidement prévu à cet effet dans le véhicule pour atteindre la position de repos.

7. Dispositif de maintien (10) selon la revendication 5 ou 6, dans lequel l'appareil d'entrée (18) comportant un affichage présente sur sa face arrière une configuration de surface qui correspond à la surface qui l'entoure dans la position de repos.

8. Dispositif de maintien (10) selon l'une des revendications précédentes 5 à 7, dans lequel il présente un dispositif de déplacement motorisé avec lequel l'appareil d'entrée (18) est déplacé d'une position d'utilisation à la position de repos et/ou de la position de repos à une position d'utilisation.

9. Dispositif de maintien (10) selon l'une des revendications précédentes, dans lequel il présente une enveloppe enveloppant au moins partiellement le dispositif de maintien (10).

10. Véhicule, comportant un dispositif de maintien (10) selon l'une des revendications précédentes.
